# FASCICULE DE BREVET EUROPEEN

(11) **EP 4 423 369 B1**
(45) Date de publication et mention de la délivrance du brevet: **02.04.2025**
(21) Numéro de dépôt: 23790700.1
(22) Date de dépôt: 20.10.2023
(51) Int. Cl.: F02C 7/06, F01D 15/10, F01D 25/16, F01D 21/00

(54) **ASSEMBLAGE POUR TURBOGÉNÉRATEUR**
TURBINENGENERATORANORDNUNG
TURBINE GENERATOR ASSEMBLY

(30) Priorité: 21.10.2022 BE 202205849
(43) Date de publication de la demande: 04.09.2024
(73) Titulaire: Mitis, 4280 Hannut (BE)
(72) Inventeur: DELANAYE, Michel, 4280 Hannut (BE); TENEY, Jean-Michel, 4020 Liège (BE); HUBERT, Marine, 4280 Hannut (BE); DELVAUX, Michel, 4280 Hannut (BE)
(74) Mandataire: Gevers Patents
(86) Numéro de dépôt international: PCT/EP2023/079373
(87) Numéro de publication internationale: WO 2024/084088

(56) Documents cités:
- DE-A1- 102014 210 451
- DE-U1- 202006 004 975
- FR-A1- 2 898 676
- FR-A1- 3 027 103
- FR-B1- 2 824 135
- US-A1- 2003 223 892
- US-B1- 6 305 169

## Description

### Domaine technique

La présente invention concerne un assemblage qui forme une partie d'un turbogénérateur et est destiné à être utilisé dans un appareil de production d'électricité ou de cogénération d'énergie.

### Art antérieur

Des appareils de production d'électricité ou de cogénération d'énergie connus comportent un dispositif de combustion alimentant en gaz de combustion une turbine couplée mécaniquement à un compresseur compressant de l'air injecté dans le dispositif de combustion. Un tel appareil est par exemple décrit dans le document WO2022089822A1.

Le couplage mécanique entre la turbine et le compresseur passe par un élément central. Le document DE 10 2014 210 451 A1 divulgue un exemple d'une telle configuration. L'élément central peut être supporté en rotation par des paliers radiaux. Les documents US 6,305,169 B1, US 2003/223892 A1 et DE 20 2006 004 975 U1 divulguent de tels couplages mécaniques. Le positionnement adéquat de ces paliers est essentiel afin d'obtenir une excellente stabilité, en particulier à haute vitesse de rotation.

Dans ce cadre, un moteur-générateur peut être couplé mécaniquement à la turbine et au compresseur par l'élément central. Dans ce cas, une circulation d'air suffisante doit être prévue entre le rotor et le stator du moteur-générateur, en particulier à des fins de refroidissement. En outre, un rotor de longueur limitée est préférable pour assurer la stabilité rotorique de l'appareil.

Ces contraintes techniques découragent, à tout du moins complexifient, l'intégration de moyens contribuant au contrôle et/ou à la surveillance de l'appareil lors de son fonctionnement. Dans le contexte techniquement distinct d'un moteur hybride pour véhicule automobile, le document FR 3 027 103 A1 divulgue l'usage d'un capteur de position angulaire monté sur un stator du moteur pour détecter un déplacement de pales présentes sur une cible d'un rotor du moteur.

### Exposé de l'invention

L'objet de l'invention est de fournir un assemblage pour turbogénérateur selon la revendication 1.

Dans ce but, l'invention propose un assemblage pour turbogénérateur comprenant :
- une turbine configurée pour être alimentée en gaz de combustion par un dispositif de combustion ;
- un compresseur couplé mécaniquement à la turbine par un élément central ; et
- un moteur-générateur décalé axialement du compresseur et couplé mécaniquement à la turbine et au compresseur par l'élément central ;
comprenant un détecteur de position angulaire de l'élément central, qui comprend :
- une cible fixée à une extrémité de l'élément central, et
- un capteur inductif fixe par rapport à un stator du moteur-générateur.

Le détecteur permet de déterminer une position angulaire de l'élément central simplement, en tenant compte des contraintes techniques de l'assemblage, de façon à pouvoir exploiter cette donnée pour le contrôle et/ou la surveillance de l'assemblage lors de son fonctionnement, par exemple, en contrôlant en boucle fermé la rotation de la partie rotorique de l'assemblage. De cette façon, un contrôle est possible, ce qui permet d'éviter un décrochage de l'assemblage.

L'utilisation d'une cible fixée en extrémité de l'élément central et d'un capteur inductif associé à la cible est avantageuse. La cible peut revêtir l'extrémité de l'élément central, d'une part sans obstruer la circulation d'air dans l'assemblage, et d'autre part sans nécessiter d'extension axiale substantielle de la partie rotorique de l'assemblage, donc avec un encombrement limité. En outre, le capteur inductif, en étant agencé fixement par rapport au et/ou au niveau du et/ou sur le stator, peut être positionné à proximité immédiate de la cible en tirant profit de la rotation de l'élément central (et donc de la cible) pour générer les courants utiles à la détection de la position angulaires de l'élément central.

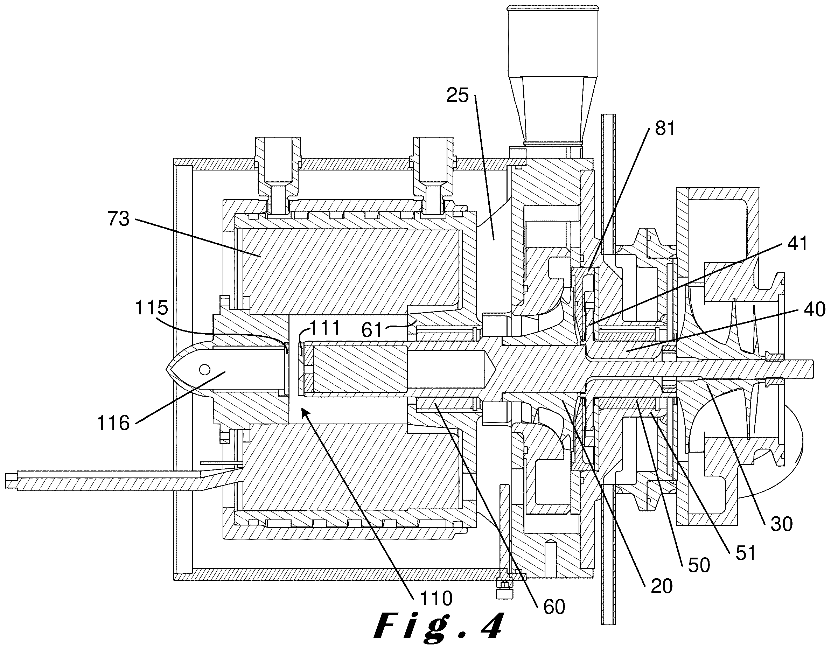

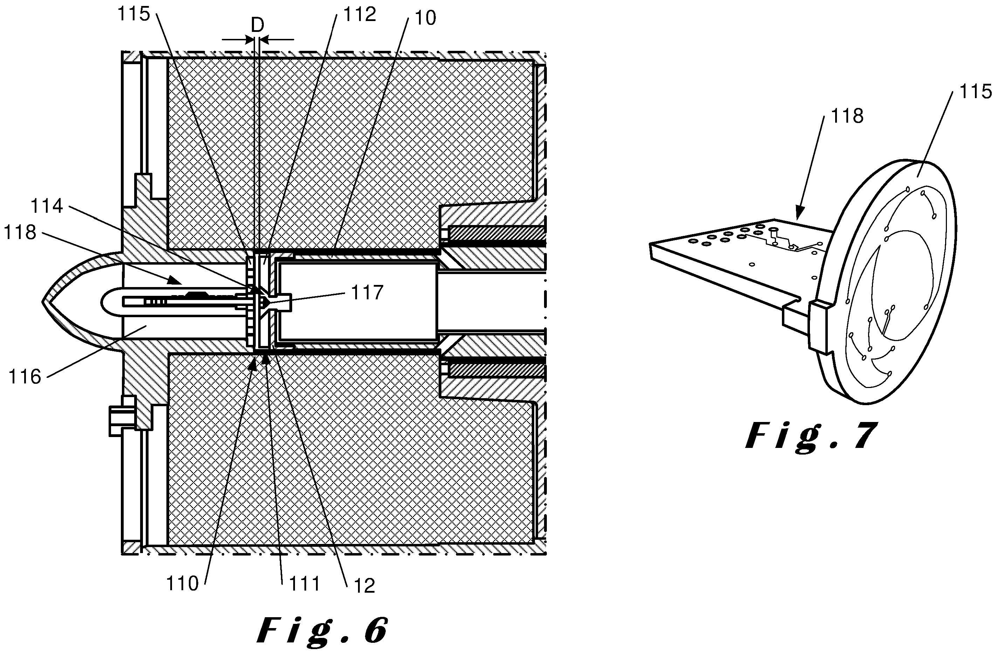

Ces avantages sont renforcés dans le cas d'un moteur-générateur avec un rotor fixé à l'élément central muni d'un dispositif magnétique rotorique agencé dans ou autour de l'élément central à partir de son extrémité. En effet, dans ce cas, pour limiter en longueur le rotor, le dispositif magnétique rotorique est agencé au niveau du stator ; typiquement, ce dernier entour le dispositif magnétique rotorique. Comme la cible simplement fixé en extrémité de l'élément central, elle est ainsi de préférence agencée également au niveau du stator, comme le capteur inductif. Une place axiale supplémentaire ou un prolongement axial du rotor et/ou de l'élément central n'est donc pas nécessaire pour le détecteur car la détecteur se fait au niveau du stator, comme illustré en figures 4 et 6 ci-après introduites.

Une limitation de la longueur du rotor et/ou de l'élément central est bénéfique pour la stabilité et le dynamisme de l'assemblage, en particulier dans le cas d'un élément central rigide de diamètre mesuré radialement compris entre 15 et 40 mm sujet à une première fréquence propre élevée.

Le détecteur de l'assemblage selon l'invention permet également une détermination de la position angulaire de l'élément central indépendante du bruit électromagnétique et de la température qu'il est susceptible de subir au sein d'un turbogénérateur.

La partie rotorique de l'assemblage est préférentiellement prévue pour tourner à une vitesse d'au moins 80.000 tours par minute, plus préférentiellement au moins 100.000 tours par minute. Il peut par exemple être prévu pour tourner à une vitesse entre 90.000 et 150.000 tours par minute.

Tel qu'il est connu d'un homme du métier, le « moteur-générateur » fonctionne en moteur lorsqu'il est alimenté en énergie électrique et fournit de l'énergie sous forme de mouvement, et en générateur lorsqu'il est alimenté en énergie sous forme de mouvement et fournit de l'énergie électrique. De façon alternative, le terme « moteur-générateur » peut être substitué dans ce document par « moteur et/ou générateur ». Le moteur-générateur est un moteur-générateur électrique comprenant un rotor et un stator.

Le rotor du moteur-générateur est typiquement formé d'une partie de l'élément central sur laquelle un dispositif magnétique rotorique est fixé. Le dispositif magnétique rotorique comprend un ou plusieurs aimants qui sont de préférence permanents.

Le détecteur de position angulaire permet de préférence de déterminer également la vitesse de rotation de l'élément central.

La cible est de préférence agencée dans (et/ou selon) un plan radial à l'extrémité de l'élément central. Le capteur inductif est préférentiellement aligné de façon axiale (i.e. « sur l'axe » d'extension principal de l'assemblage, en particulier de l'élément central) sur la cible, face à celle-ci, ou en d'autres termes, en face de celle-ci. Cet agencement est avantageusement simple à mettre en place dans un espace très réduit, au niveau même du stator du moteur générateur.

Le capteur inductif s'étend alors également selon un plan radial parallèle au plan selon lequel s'étend la cible, la cible et le capteur inductif se faisant face à petite distance, ce qui permet une détermination sans bruit de la position angulaire de l'élément central (et donc, le cas échéant, du rotor du moteur-générateur). La distance séparant la cible et le capteur inductif est de préférence comprise entre 0,5 et 2,0 mm, plus préférentiellement entre 1,0 et 1,5 mm, par exemple, environ (c'est-à-dire, à 10% près) 1,0 mm. Une distance supérieure à 2,0 mm rend incertain la détermination de la position angulaire dans cet environnement technique, tandis qu'une distance suffisante de sécurité d'au moins 0,5 mm doit être assurée entre la cible et le capteur inductif.

Conformément à la présente invention, le capteur inductif est connecté à un dispositif électronique aligné axialement avec le capteur inductif et comprenant une carte d'acquisition de position angulaires (et/ou, le cas échéant, de vitesses de rotation) de l'élément central. Le dispositif électronique prolonge axialement le capteur inductif, sans faire saillie radialement par rapport à ce dernier.

Vu que le dispositif électronique est aligné axialement avec le capteur inductif, il se loge dans le prolongement axial du capteur inductif et n'obstrue pas la circulation d'air entre le stator et le rotor du moteur-générateur. Il s'agit d'un effet avantageux au regard des dispositifs électroniques semblables de l'art antérieur qui sont agencés dans le même plan que le capteur inductif. De préférence, le dispositif électronique, ou à tout du moins, la carte d'acquisition, s'étend selon un plan (porté axialement et) perpendiculaire au plan radial selon lequel s'étend le capteur inductif, tel qu'illustré en figure 7 ci-après introduite.

Le dispositif électronique permet d'acquérir et, de préférence, de traiter et/ou d'exploiter les données de positions angulaires (et/ou de vitesse de rotation le cas échéant) issues du détecteur. De préférence, il comprend ou est connecté à un processeur ou tout moyen semblable pour effectuer un tel traitement et/ou une telle exploitation, dans le but de surveiller et/ou contrôler (par exemple, en boucle fermé) le fonctionnement en rotation de l'assemblage, ce qui permet d'éviter un décrochage éventuel de l'assemblage selon l'invention.

Le dispositif électronique est de préférence supporté par un boitier en forme d'ogive prolongeant axialement le capteur inductif. Dans ce cas, le boitier est de préférence également fixe par rapport au stator du moteur-générateur. Le boitier permet du supporter fixement l'ensemble du dispositif électronique et du capteur inductif. Sa forme d'ogive (en particulier, telle que représentée en figures 4 et 6 ci-après introduites) joue un rôle aérodynamique avantageux permettant de contribuer à la circulation d'air entre le rotor et le stator du moteur-générateur sans l'obstruer.

De préférence, le boitier comprend des encoches internes de placement et de maintien du dispositif électronique et du capteur inductif, typiquement selon deux plans perpendiculaires comme décrit ci-dessus.

En bref, selon plusieurs réalisations, le capteur inductif est connecté à un dispositif électronique supporté par un boitier en forme d'ogive.

Selon un mode de réalisation préféré de la cible, celle-ci comprend, et de façon plus préférée, est constituée, d'une surface isolante et d'un élément radial métallique. L'élément radial métallique, de par sa nature, devient alors un point de repère du capteur inductif, en particulier aux fins de la détermination de la position angulaire de l'élément central. Cette réalisation est particulièrement simple et peu couteuse à mettre en place dans un espace limité.

Une réalisation facile et efficace de la cible est de revêtir partiellement la surface isolante avec l'élément radial métallique, par exemple en le fixant dessus, par exemple en le collant ou en le vissant dessus. De cette façon, l'élément radial métallique est agencé axialement entre le capteur inductif et la surface isolante. Il est vu directement par le capteur inductif qui distingue aisément, lors de la rotation l'élément radial métallique du reste de la surface isolante.

Par exemple, la surface isolante peut présenter une épaisseur axiale de 2,0 à 3,0 mm, par exemple, 2,4 mm, tandis que l'élément radial métallique est très mince axialement, par exemple d'une épaisseur axiale de seulement quelques µm, par exemple entre 20 et 60 µm, par exemple 35 µm.

L'élément radial métallique est de préférence constitué de cuivre (Cu). La surface isolante est par exemple constitué de « *printed circuit board* » (PCB), de préférence d'un matériau composite de résine époxyde renforcé en fibre de verre (connu sous le nom de FR-4). De façon avantageuse, ce même substrat peut être utilisé pour la conception du capteur inductif et/ou du dispositif électronique le cas échéant. Il présente l'avantage d'être de faible poids et d'une bonne résistance à la force centrifuge, ce qui est particulièrement pertinent dans le cas de la cible.

La surface isolante (et de préférence la cible dans son ensemble) et le capteur inductif s'étendent de préférence selon deux disques parallèles. La surface isolante a de préférence une forme annulaire tandis que le capteur inductif est de préférence en forme de disque de même rayon externe.

En d'autres termes, la cible et le capteur inductif ont préférentiellement chacun un bord circulaire de même rayon.

Cette géométrie vise à s'adapter au mieux à l'assemblage, par exemple car la cible est fixé à l'extrémité de l'élément central (et du rotor) qui présente de façon typique une extrémité sous forme de disque de même rayon. Ainsi, la cible et le capteur inductif s'intègrent complètement dans l'assemblage (sans dépasser radialement) de préférence au niveau du stator du moteur-générateur, en très peu d'espace et sans obstruer la circulation d'air entre le stator et le rotor du moteur-générateur.

La surface isolante peut comprendre un repère visuel, tel qu'une marque par un point ou un trait radial, utile pour des essais de l'assemblage à faible vitesse de rotation.

L'élément radial métallique peut prendre diverses formes radiales qui dépendent de contraintes de l'assemblage, par exemple du nombre de pôles d'un dispositif magnétique rotorique comme mentionné ci-avant. Il s'agit de préférence d'une surface métallique qui revêt en partie la surface isolante. Cette réalisation est préférée car elle permet une détection aisée tout en étant simple à concevoir. Par exemple, l'élément radial métallique est une surface d'un seul tenant et prend par exemple la forme d'un demi-cercle ou d'une demi-lune, et/ou recouvre environ (à 10% près) la moitié de la surface isolante. Cette réalisation est notamment adaptée à une détection lorsque le dispositif magnétique rotorique est bipolaire. L'homme du métier comprendra que d'autres réalisations par exemple, avec deux portions de surfaces métalliques revêtant deux quart opposés de la surface isolante, ou un autre nombre de telles portions, sont possibles.

De préférence, la cible comprend un trou axial. C'est notamment le cas lorsque la surface isolante est de forme annulaire comme décrit ci-dessus. Le trou axial permet d'inclure des éléments de fixation de la cible à l'extrémité de l'élément central. De préférence, le trou est chanfreiné. En particulier, le trou présente une forme évasée sur la face de la cible opposée à l'extrémité de l'élément central. Cette réalisation est avantageuse car elle permet de fixer la cible par une vis, par exemple de géométrie adaptée, sans que la tête de la vis ne dépasse axialement au-delà de la cible. Ainsi, le capteur inductif peut être agencé au plus près de la cible, comme décrit ci-avant, sans devoir prévoir une distance supplémentaire pour la tête de vis (ou tout autre élément de fixation).

En particulier, de préférence, une pièce de fixation, par exemple une vis, est alors agencée dans le trou axial chanfreiné pour fixer la cible à l'extrémité de l'élément central.

Une réalisation de la cible non détaillée présentement et alternative à l'exposé ci-dessus peut consister en un prolongement métallique en partie usiné de l'élément central (et/ou du rotor moteur-générateur). Ainsi, la différence de longueur axiale de l'élément central (et/ou du rotor) entre sa partie usinée et sa partie non-usinée peut être détectée par le capteur inductif pour déduire la position angulaire de l'élément central (et/ou du rotor).

En particulier, de préférence, une pièce de fixation, par exemple une vis, est alors agencée dans le trou axial chanfreiné pour fixer la cible à l'extrémité de l'élément central.

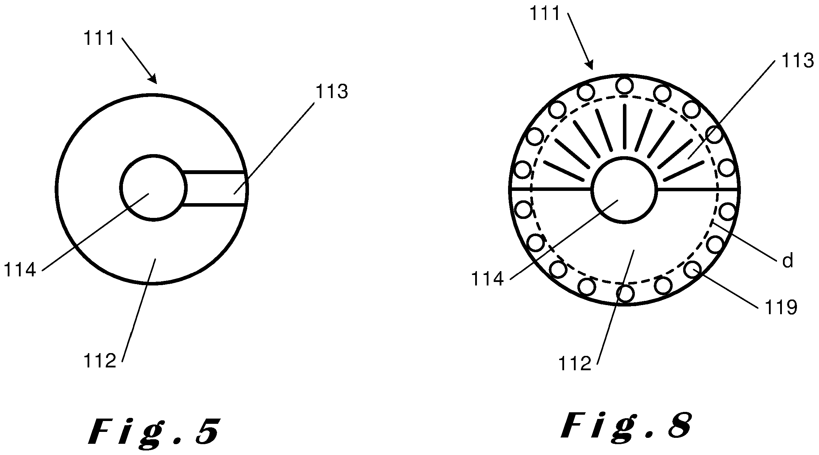

Selon une réalisation de la cible visible en figure 8 ci-après introduite, la cible se prolonge en un anneau comprenant une pluralité d'orifices axiaux. Ceux-ci sont de préférence orientés à l'opposé de l'élément central. Le capteur inductif fait face à la cible de préférence sans s'étendre parallèlement à l'anneau, de sorte qu'il ne contribue pas à la détermination de la position angulaire de l'élément central.

Les orifices peuvent alors être avantageusement utilisés pour équilibrer l'assemblage *in situ* de l'assemblage, par exemple en insérant un point de soudure dans un ou plusieurs des orifices.

Comme évoqué dans l'art antérieur, l'assemblage est préférentiellement muni d'un ou de plusieurs paliers radiaux prévus pour guider en rotation l'élément central. Selon un mode de réalisation dans le cadre de la présente invention, les paliers comprennent :
- un premier palier radial situé, axialement, entre la turbine et le compresseur, et
- un deuxième palier radial, situé, axialement, entre le compresseur et le moteur-générateur.

Les paliers radiaux sont alors situés, axialement, de part et d'autre du compresseur : le premier palier est situé entre la turbine et le compresseur, et le deuxième palier est situé entre le compresseur et le moteur-générateur. Une telle répartition des paliers radiaux permet de reprendre les moments de force de façon particulièrement efficace car ces couples proviennent des masses de la turbine, du compresseur et du rotor du moteur-générateur (ce dernier étant particulièrement lourd). Par conséquent, il permet de limiter le nombre de paliers radiaux.

Par ailleurs, la position du deuxième palier, de l'autre côté du compresseur par rapport à la turbine, permet de diminuer la distance entre la turbine et le compresseur, de ventiler mieux la région entre la turbine et le compresseur qui est très chaude, et donc d'améliorer la stabilité du système.

Dans le cadre du présent document, un palier « radial » est un palier empêchant un mouvement perpendiculaire à l'axe de rotation, et un palier « axial » est un palier empêchant un mouvement parallèle à l'axe de rotation. Les termes « radial » et « axial » font d'ailleurs plus généralement référence à des directions respectivement perpendiculaires et parallèles à l'axe de rotation. L'assemblage et notamment l'élément central et/ou le rotor s'étendent de préférence selon cet axe et tourne autour de celui-ci. Les paliers radiaux peuvent être séparés, radialement, de l'élément central par un autre élément en rotation et fixé à l'élément central.

Dans le cadre du présent document, un palier radial est un palier aérodynamique. Ainsi, lors de la rotation, l'élément central est en lévitation, séparé du palier par une couche d'air qui supporte le palier par un effet de portance. Ce n'est donc pas un palier à roulement. Il ne nécessite pas de lubrification.

Selon un mode de réalisation, le premier palier radial et le deuxième palier radial sont des paliers à feuille. Les paliers à feuille permettent d'utiliser un élément central de diamètre plus grand que ne le permettraient d'autres paliers, par exemple des paliers à billes. Cela permet d'augmenter la première fréquence propre de flexion, ce qui améliore la stabilité et l'opération à haute vitesse.

Selon un mode de réalisation, l'assemblage comprend une canalisation d'air débouchant sur le compresseur, la canalisation d'air étant située entre le compresseur et le deuxième palier radial et ayant une composante radiale.

En effet, au lieu d'une canalisation d'air axiale située entre le rotor et le stator, il est préféré que la canalisation d'air soit entre le deuxième palier radial et le compresseur et ne soit pas parallèle à l'axe (autrement dit qu'elle ait une composante radiale). Cela permet que la distance entre le rotor et le stator soit particulièrement petite, ce qui améliore le stabilité électro-magnéto-mécanique du système et réduit la puissance réactive, tout en améliorant le déphasage angulaire (cosinus ϕ). La canalisation d'air peut comprendre un ou plusieurs virages, comprendre une section radiale et/ou comprendre une volute d'entrée qui prend l'air sur le côté, et lui fait faire une spirale avec un angle spécifique.

Selon un mode de réalisation, l'élément central est fait d'une seule pièce ou d'une pluralité de pièces fixées ensemble de façon à tourner de façon intégrale.

L'élément central, qui s'étend de la turbine au moteur-générateur en passant par le compresseur, a donc une vitesse de rotation qui est identique sur toute son étendue. Un élément central d'une pièce ou fait de pièces fixées de façon intégrale simplifie la procédure d'équilibrage, qui est particulièrement délicate dans un assemblage pour turbogénérateur tel que celui de l'invention.

Selon un mode de réalisation, le premier palier radial est le seul palier radial entre la turbine et le compresseur. Il n'y a donc pas d'autre palier radial que le premier palier radial entre la turbine et le compresseur. Cela permet de diminuer la distance entre la turbine et le compresseur, et donc d'améliorer la stabilité du système.

Selon un mode de réalisation, le premier palier radial et le deuxième palier radial sont les seuls paliers radiaux. Il n'y a donc pas d'autre palier radial, ni au-delà du moteur-générateur par rapport au compresseur, ni entre le moteur-générateur et la turbine, ni au-delà de la turbine par rapport au compresseur. L'assemblage pour turbogénérateur selon l'invention tournant particulièrement vite, la question de la concentricité est importante. Or, plus le nombre de paliers est faible, plus il est facile qu'ils soient tous concentriques. Avoir deux paliers est un compromis intéressant entre les contraintes de stabilité et de concentricité.

Selon un mode de réalisation, l'assemblage pour turbogénérateur comprend une butée et un palier axial configurés pour empêcher un mouvement axial de la butée. La butée, qui peut être appelée butée axiale, est de préférence située entre la turbine et le compresseur. Elle est fixée de façon directe ou indirecte à l'élément central.

Selon un mode de réalisation, l'assemblage pour turbogénérateur comprend un arbre fixé à l'élément central de façon détachable et de façon à ce que l'arbre et l'élément central tournent ensemble, la butée faisant partie de l'arbre. L'arbre pourrait aussi être appelé « élément rotatif ». La présence de l'arbre, formant une pièce distincte de l'élément central, permet de pouvoir enfiler les paliers radiaux, le compresseur et la turbine sur l'élément central.

Selon un mode de réalisation, le moteur-générateur comprend un rotor fixé à l'élément central et comprenant un dispositif magnétique rotorique bipole, de préférence à aimant(s) permanent(s). En d'autres termes, le dispositif magnétique rotorique ne comporte qu'un seul pôle sud et un seul pôle nord. Vu la vitesse de rotation très élevée, l'assemblage est plus facile à redresser qu'avec un quadrupôle ou avec plus de pôles magnétiques. Cela peut être un seul aimant permanent.

Selon un mode de réalisation, le moteur-générateur comprend un rotor fixé à l'élément central et comprenant un dispositif magnétique rotorique situé à l'intérieur de l'élément central. Cela permet que le dispositif magnétique rotorique, qui est particulièrement lourd, soit proche de l'axe. Il est cependant possible, tout en restant dans le cadre de l'invention, que le dispositif magnétique rotorique soit fixé à l'extérieur de l'élément central, par exemple fretté sur l'élément central.

Selon un mode de réalisation, l'élément central comprend une cavité ayant une ouverture dans un plan radial et située à une extrémité de l'élément central, le dispositif magnétique rotorique étant situé dans la cavité. L'ouverture permet d'introduire le dispositif magnétique rotorique dans l'élément central en le centrant de façon particulièrement précise.

Selon un mode de réalisation, l'élément central a un diamètre supérieur à 15 mm et inférieur à 40 mm. Ce diamètre est naturellement mesuré radialement. Le diamètre de l'élément central peut varier en fonction de la position le long de l'axe, mais, de préférence, il n'est nulle part inférieur à 15 mm ou supérieur à 40 mm. Un faible diamètre permet de réduire la valeur de la première fréquence propre de flexion, ce qui détériore la stabilité et l'opération à haute vitesse. Un diamètre élevé l'efficacité de l'assemblage pour turbogénérateur. L'intervalle susmentionné permet un compromis entre ces deux contraintes.

L'invention propose aussi un appareil de production d'électricité ou de cogénération d'énergie comprenant un assemblage pour turbogénérateur selon l'invention. De préférence, les seuls paliers radiaux sont le premier palier radial et le deuxième palier radial.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 schématise un appareil de production d'électricité ou de cogénération d'énergie ;
- la figure 2 est une coupe axiale d'une partie d'un assemblage pour turbogénérateur,
- la figure 3 est une coupe axiale d'une partie d'un autre assemblage pour turbogénérateur,
- la figure 4 est une coupe axiale de l'assemblage pour turbogénérateur partiellement illustré figure 2,
- la figure 5 est une vue de face d'une cible,
- la figure 6 est une coupe axiale partielle de l'assemblage pour turbogénérateur partiellement illustré figure 2, reproduisant une partie de la figure 4 avec davantage de détails,
- la figure 7 est une vue tridimensionnelle d'un capteur inductif connecté à un dispositif électronique,
- la figure 8 est une vue de face d'une autre cible que celle de la figure 5.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants. En outre, les fonctions décrites peuvent être réalisées par d'autres structures que celles décrites dans le présent document.

Sur les figures, les éléments identiques ou analogues peuvent porter les mêmes références. Les numéros de référence dans les revendications ne limitent pas leur portée.

Dans ce document, les termes « premier » et « deuxième » servent à différencier les différents éléments et n'impliquent pas d'ordre entre ces éléments. Dans ce document, l'usage des verbes « comprendre », « inclure », « comporter », ou toute autre variante, ainsi que leurs conjugaisons, ne peut exclure la présence d'éléments autres que ceux mentionnés. De façon semblable, dans ce document, l'usage d'un article indéfini « un », « une », et/ou d'un article défini « le », « la » ou « l' », pour introduire un élément qui n'exclut pas la présence d'une pluralité de ces éléments.

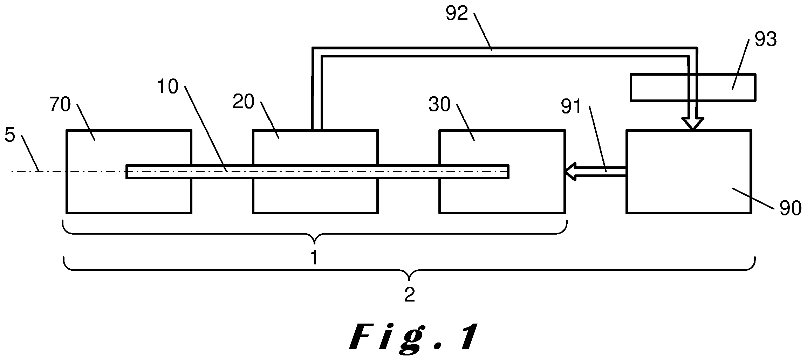

La figure 1 illustre schématiquement différents éléments d'un appareil de production d'électricité ou de cogénération d'énergie 2. L'appareil 2 comprend un dispositif de combustion 90, une turbine 30, un compresseur 20 et un moteur-générateur 70. Le dispositif de combustion 90 transmet des gaz de combustion, (c'est-à-dire résultant de la combustion) à la turbine 30 via un premier conduit 91. La turbine 30, le compresseur 20 et le moteur-générateur 70 sont couplés de façon mécanique via un élément central 10. De l'air comprimé par le compresseur 20 est envoyé au dispositif de combustion 90 via un deuxième conduit 92 et un récupérateur 93 qui préchauffe l'air comprimé avant injection dans le dispositif de combustion 90. Le compresseur 20 est de préférence fretté sur l'élément central 10.

Dans le cadre de ce document un assemblage pour turbogénérateur 1 comprend la turbine 30, la compresseur 20, le moteur-générateur 70 et l'élément central 10 qui sont alignés pour tourner autour de l'axe 5 (axe de rotation). Il est connecté au dispositif de combustion 90. La turbine 30, la compresseur 20, le moteur-générateur 70 sont disposés, axialement, dans l'ordre suivant : turbine 30, compresseur 20, moteur-générateur 70, de façon à être distants axialement l'un de l'autre.

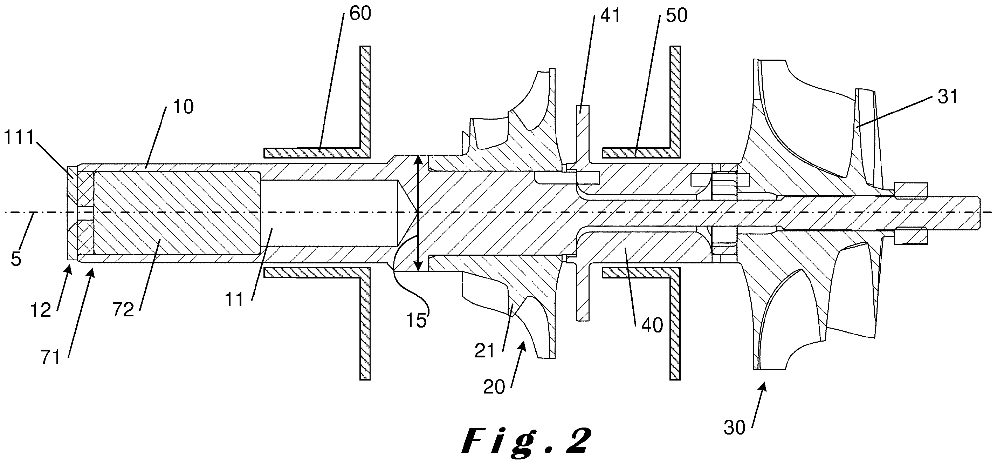

La figure 2 illustre des parties d'un assemblage pour turbogénérateur 1. On y voit notamment les pales 31 de la turbine 30, les pales 21 du compresseur 20, et un dispositif magnétique rotorique 72 du rotor 71 du moteur-générateur 70.

Dans cette réalisation, la turbine 30 et le compresseur 20 sont séparés, axialement, par un premier palier radial 50, qui entoure, radialement, l'élément central 10. Le premier palier radial 50 est, préférentiellement, le seul palier radial entre la turbine 30 et le compresseur 20.

Dans cette réalisation, le compresseur 20 et le moteur-générateur 70 sont aussi séparés, axialement, par un deuxième palier radial 60, qui entoure, radialement, l'élément central 10. En particulier, le deuxième palier radial 60 sépare, axialement, le compresseur du dispositif magnétique rotorique 72. Le deuxième palier radial 60 est, préférentiellement, le seul palier radial entre le compresseur 20 et le moteur-générateur 70.

Le premier palier radial 50 et le deuxième palier radial 60 sont de préférence des paliers à feuille. Le premier palier radial 50 et le deuxième palier radial 60 sont préférentiellement les seuls paliers radiaux de l'assemblage pour turbogénérateur 1 et de l'appareil de production d'électricité ou de cogénération d'énergie 2.

De préférence, l'élément central 10 est fait d'une seule pièce ou d'une pluralité de pièces fixées ensemble de façon à tourner toutes à la même vitesse angulaire, comme si elles étaient d'une pièce.

De préférence, le diamètre radial 15 de l'élément central, quelle que soit la position de le long de l'axe 5, est supérieur à 15 mm et/ou est inférieur à 40 mm.

De préférence, l'élément central 10 est fixé à un arbre 40 qui l'entoure radialement, et le premier palier radial 50 entoure l'arbre 40 radialement. L'arbre 40 est situé, axialement, entre la turbine 30 et le compresseur 20. L'arbre 40 comprend une butée 41 axiale maintenue par un palier axial 81 (visible en figure 4). La butée 41 est telle que le diamètre 15 de l'élément central 10, en tout point, est plus petit que le diamètre de la butée 41.

Le dispositif magnétique rotorique 72 est préférentiellement un bipole, par exemple un aimant. Dans le mode de réalisation de la figure 2, il est situé dans une cavité 11 à l'intérieur de l'élément central 10. La cavité 11 comprend, de préférence, une ouverture débouchant axialement sur l'extrémité 12 de l'élément central 10.

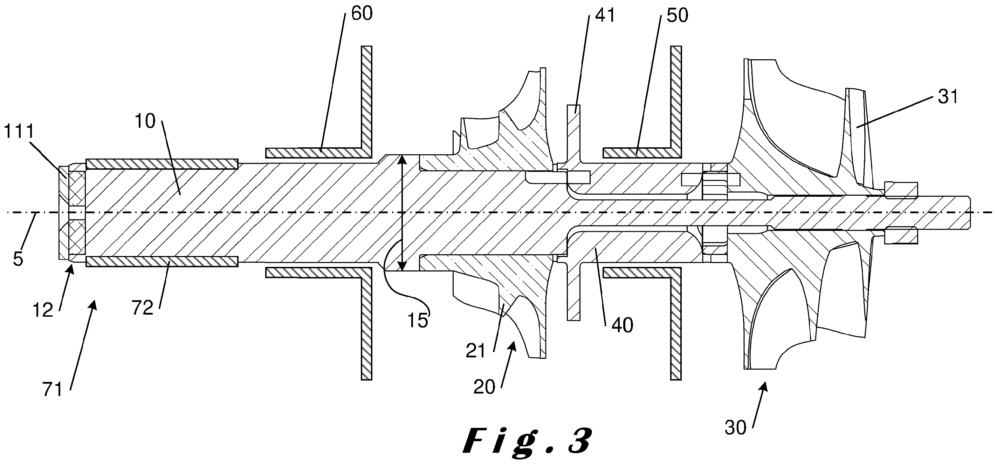

Dans le mode de réalisation de la figure 3, le dispositif magnétique rotorique 72 est alternativement fixé à l'extérieur de l'élément central 10, de façon à l'entourer radialement.

Les figures 2 et 3 illustrent en outre une cible 111 fixée à une extrémité 12 de l'élément central 10 qui est au cœur de la présente invention comme décrit dans l'exposé de l'invention. Cette même cible est commentée ci-après au regard des figures 4, 5 et 6.

La figure 4 illustre des parties d'un assemblage pour turbogénérateur 1. L'assemblage pour turbogénérateur 1 comprend une canalisation d'air 25 amenant de l'air au compresseur 20. La canalisation d'air 25 est préférentiellement située entre le compresseur 20 et le deuxième palier radial 60. Elle a une composante radiale, c'est-à-dire que le trajet de l'air dans cette canalisation d'air 25 n'est pas uniquement axial.

L'assemblage pour turbogénérateur 1 comprend préférentiellement un premier support palier 51 autour du premier palier radial 50 et un deuxième support palier 61 autour du deuxième palier radial 60. Le premier 51 et le deuxième 61 supports paliers sont fixes l'un par rapport à l'autre et sont concentriques. Le premier 51 et le deuxième 61 supports paliers sont fixes par rapport à un stator 73 du moteur-générateur 70.

Dans le cadre de cette invention, l'assemblage pour turbogénérateur 1 est muni d'un détecteur 110 permet de déterminer la position angulaire de l'élément central 10 et de préférence la vitesse angulaire de l'élément central 10.

Le détecteur 110 comprend une cible 111 fixée à l'extrémité 12 de l'élément central 10 dans un plan radial. Elle tourne avec l'élément central 10 tout en restant dans le même plan. Le détecteur 110 comprend aussi un capteur inductif 115 aligné axialement sur la cible 111, et fixe par rapport au stator 73 du moteur-générateur 70. Comme il ressort de la figure 6, le détecteur est connecté à un dispositif électronique 118 comprenant une carte d'acquisition de vitesse et/ou de position angulaires qui est supportée par un boitier 116 en forme d'ogive. Sur base de mesures de positions angulaires et/ou de vitesses angulaires du détecteur 110, le dispositif électronique 118 permet typiquement de contrôler et/ou de surveiller l'assemblage pour turbogénérateur 1, ce qui permet d'éviter son décrochage.

La cible 111 et le capteur inductif 115 ont de préférence une géométrie semblable comme il ressort des figures 5 à 8. Ils s'inscrivent dans deux disques de même rayon, s'étendant selon deux plans radiaux parallèles, de sorte qu'ils se font face à une distance D d'environ 1 mm. Ils ont tous les deux un bord circulaire d de même rayon, correspondant approximativement au rayon d'une section radiale à l'extrémité 12 de l'élément central 10. La cible 111 est configurée pour coopérer de façon électromagnétique avec le capteur inductif 115.

Le capteur inductif 115 est plus précisément visible en figure 7. Il est conçu par exemple à partir d'un corps en PCB sur lequel est agencé différentes bobines de métaux, par exemple du cuivre, et des points de connexion. Ce type de dispositif est connu de l'homme du métier. Il comprend par exemple, une bobine émettrice et deux bobines réceptrices pour le signal issue de la cible. Le dispositif électronique 118, ou à tout du moins la carte d'acquisition, est formé d'un circuit imprimé par exemple sur un matériau du même PCB. Il est connecté au capteur inductif 115 par une pluralité de points de soudure entre les bobines et le circuits électroniques, de façon à s'étendre selon un plan perpendiculaire au plan radial selon lequel s'étend le capteur inductif 115, de façon à être dans son prolongement axial et à ne pas faire saillie radialement par rapport au capteur inductif 115.

La figure 5 illustre la cible 111 dans un mode de réalisation de l'invention. Elle est constituée d'une surface isolante 112 et d'un élément radial métallique 113. Ce dernier est illustré sous la forme d'une surface métallique radiale fixée dans ou sur la surface isolante 112. La cible 111 est percée d'un trou 114, de préférence chanfreiné et axial comme cela est visible de la coupe des figures 2, 3, 4 et 6. Ce trou 114 permet de fixé la cible 111 sur l'élément central 10 au moyen d'une vis 117 à tête fraisée et/ou avec une géométrie adaptée sans que la tête de vis de fasse saillie axialement de la cible 111, comme il est illustré en figure 6.

La figure 8 illustre une autre cible 111 qui convient à la réalisation de la présente invention. L'élément radial métallique 113 se présente sous la forme d'une demi-lune, plus précisément d'un demi anneau recouvrant environ la moitié de la surface isolante 112. Dans cette réalisation, la cible 111 se prolonge en un anneau comprenant une pluralité d'orifices axiaux 119 utilisables pour un équilibrage *in situ* de l'assemblage pour turbogénérateur 1 en y insérant des poids, par exemple issus de dépôts de métaux fondus. L'anneau est agencé au-delà du bord d de sorte qu'il ne contribue pas à la détection par le capteur inductif et ne perturbe pas celle-ci. L'anneau et l'élément radial en demi-lune sont deux caractéristiques indépendantes bien qu'illustrés sur une même figure.

La cible 111 et le capteur inductif 115 peuvent être conçus à partir d'un même corps (la surface isolante 112 pour la cible 111 et le support des bobines de cuivre pour le capteur inductif 115) en matériaux PCB comme décrit dans l'exposé de l'invention.

En bref, l'invention se rapporte à un assemblage pour turbogénérateur 1 pour un appareil de production ou de cogénération d'énergie comprenant une turbine 30, un compresseur 20 et un moteur-générateur 70 couplés ensemble de façon mécanique par un élément central 10. L'assemblage comprend un détecteur de position angulaire 110 de l'élément central 10 sous la forme d'une cible 111 fixée en extrémité 12 de l'élément central 10 et d'un capteur inductif 115 fixe par rapport à un stator 73 du moteur-générateur 70 agencé pour coopérer (électromagnétiquement) avec la cible 111.

La présente invention a été décrite en relation avec des modes de réalisations spécifiques, qui ont une valeur purement illustrative et ne doivent pas être considérés comme limitatifs. Il apparaîtra directement pour l'homme du métier que l'invention n'est pas limitée aux exemples illustrés ou décrits ci-dessus, et que sa portée est plus largement définie par les revendications ci-après introduites.

## Revendications

1. Assemblage pour turbogénérateur (1) comprenant :
• une turbine (30) configurée pour être alimentée en gaz de combustion par un dispositif de combustion (90) ;
• un compresseur (20) couplé mécaniquement à la turbine (30) par un élément central (10) ; et
• un moteur-générateur (70) décalé axialement du compresseur (20) et couplé mécaniquement à la turbine (30) et au compresseur (20) par l'élément central (10) ;
**caractérisé en ce que** l'assemblage pour turbogénérateur (1) comprend un détecteur de position angulaire (110) de l'élément central (10) comprenant :
- une cible (111) fixée à une extrémité (12) de l'élément central (10), et
- un capteur inductif (115) fixe par rapport à un stator (73) du moteur-générateur (70),
dans lequel le capteur inductif (115) est connecté à un dispositif électronique (118) qui comprend une carte d'acquisition de position angulaires et qui prolonge et est aligné axialement avec le capteur inductif (115), sans faire saillie radialement par rapport à ce dernier.

2. Assemblage pour turbogénérateur selon la revendication 1, dans lequel :
- la cible (111) est agencée dans un plan radial à l'extrémité (12) de l'élément central (10), et
- le capteur inductif (115) est aligné axialement sur la cible (111), face à celle-ci.

3. Assemblage pour turbogénérateur selon la revendication 1 ou 2, dans lequel une distance séparant la cible (111) et le capteur inductif (115) est comprise entre 0,5 et 2,0 mm.

4. Assemblage pour turbogénérateur selon l'une quelconque des revendications précédentes, dans lequel le dispositif électronique (118) est supporté par un boitier (116) en forme d'ogive prolongeant axialement le capteur inductif (115).

5. Assemblage pour turbogénérateur selon l'une quelconque des revendications précédentes, dans lequel la cible (111) est constituée d'une surface isolante (112) et d'un élément radial métallique (113).

6. Assemblage pour turbogénérateur selon la revendication 5, dans lequel l'élément radial métallique (113) revêt partiellement la surface isolante (112) de sorte qu'il est agencé axialement entre le capteur inductif (115) et la surface isolante (112).

7. Assemblage pour turbogénérateur selon l'une quelconque des revendications précédentes, dans lequel la cible (111) comprend un trou (114) axial chanfreiné.

8. Assemblage pour turbogénérateur selon l'une quelconque des revendications précédentes, dans lequel la cible (111) et le capteur inductif (115) ont chacun un bord circulaire (d) de même rayon.

9. Assemblage pour turbogénérateur selon l'une quelconque des revendications précédentes, dans lequel la cible (111) se prolonge en un anneau comprenant une pluralité d'orifices axiaux (119).

10. Assemblage pour turbogénérateur selon l'une quelconque des revendications 1 à 9, dans lequel le moteur-générateur (70) comprend un rotor (71) fixé à l'élément central (10), et comprenant un dispositif magnétique rotorique (72) bipole.

11. Assemblage pour turbogénérateur selon l'une quelconque des revendications 1 à 9, dans lequel le moteur-générateur (70) comprend un rotor (71) fixé à l'élément central (10), et comprenant un dispositif magnétique rotorique (72) situé à l'intérieur de l'élément central (10).

12. Assemblage pour turbogénérateur selon d'une quelconque des revendications précédentes, comprenant en outre :
• un premier palier radial (50) situé, axialement, entre la turbine (30) et le compresseur (20) et prévu pour guider en rotation l'élément central (10) ; et
• un deuxième palier radial (60), situé, axialement, entre le compresseur (20) et le moteur-générateur (70), et prévu pour guider en rotation l'élément central (10).

13. Assemblage pour turbogénérateur selon la revendication 12, dans lequel les premier (50) et deuxième (60) paliers radiaux sont les seuls paliers radiaux.

14. Assemblage pour turbogénérateur selon la revendication 12 ou 13, comprenant une canalisation d'air (25) débouchant sur le compresseur (20), la canalisation d'air (25) étant située entre le compresseur (20) et le deuxième palier radial (60) et ayant une composante radiale.

15. Appareil de production d'électricité ou de cogénération d'énergie (2) comprenant un assemblage pour turbogénérateur (1) selon l'une quelconque des revendications précédentes.

## Patentansprüche

1. Turbogeneratoranordnung (1), umfassend:
- eine Turbine (30), die konfiguriert ist, um von einer Verbrennungsvorrichtung (90) mit Verbrennungsgas versorgt zu werden;
- einen Kompressor (20), der über ein mittleres Element (10) mechanisch mit der Turbine (30) verbunden ist; und
- einen Motor-Generator (70), der axial von dem Kompressor (20) versetzt ist und mechanisch über das mittlere Element (10) mit der Turbine (30) und dem Kompressor (20) verbunden ist;
**dadurch gekennzeichnet, dass** die Turbogeneratoranordnung (1) einen Winkelpositionsdetektor (110) des mittleren Elements (10) umfasst, umfassend:
- ein Ziel (111), das an einem Ende (12) des mittleren Elements (10) befestigt ist, und
- einen Induktivsensor (115), der in Bezug auf einen Stator (73) des Motor-Generators (70) fest ist;
wobei der Induktivsensor (115) mit einer elektronischen Vorrichtung (118) verbunden ist, die eine Winkelposition-Erfassungskarte umfasst und die den Induktivsensor (115) verlängert und axial mit diesem ausgerichtet ist, ohne in Bezug auf diesen letzteren radial hervorzustehen.

2. Turbogeneratoranordnung nach Anspruch 1, wobei:
- das Ziel (111) in einer radialen Eben am Ende (12) des mittleren Elements (10) eingerichtet ist, und
- der Induktivsensor (115) axial auf dem Ziel (111), diesem zugewandt, ausgerichtet ist.

3. Turbogeneratoranordnung nach Anspruch 1 oder 2, wobei ein Abstand, der das Ziel (111) und den Induktivsensor (115) trennt, zwischen 0,5 und 2,0 mm beträgt.

4. Turbogeneratoranordnung nach einem der vorstehenden Ansprüche, wobei die elektronische Vorrichtung (118) von einem spitzenbogenförmigen Gehäuse (116) gestützt wird, das den Induktivsensor (115) axial verlängert.

5. Turbogeneratoranordnung nach einem der vorstehenden Ansprüche, wobei das Ziel (111) aus einer isolierenden Oberfläche (112) und einem radialen Metallelement (113) besteht.

6. Turbogeneratoranordnung nach Anspruch 5, wobei das radiale Metallelement (113) die isolierende Oberfläche (112) derart teilweise bedeckt, dass es axial zwischen dem Induktivsensor (115) und der isolierenden Oberfläche (112) eingerichtet ist.

7. Turbogeneratoranordnung nach einem der vorstehenden Ansprüche, wobei das Ziel (111) ein axiales abgeschrägtes Loch (114) umfasst.

8. Turbogeneratoranordnung nach einem der vorstehenden Ansprüche, wobei das Ziel (111) und der Induktivsensor (115) jeweils einen kreisförmigen Rand (d) mit gleichem Durchmesser aufweisen.

9. Turbogeneratoranordnung nach einem der vorstehenden Ansprüche, wobei das Ziel (111) sich zu einem Ring verlängert, der eine Vielzahl von axialen Öffnungen (119) umfasst.

10. Turbogeneratoranordnung nach einem der Ansprüche 1 bis 9, wobei der Motor-Generator (70) einen Rotor (71) umfasst, der am mittleren Element (10) befestigt ist und eine zweipolige Rotormagnetvorrichtung (72) umfasst.

11. Turbogeneratoranordnung nach einem der Ansprüche 1 bis 9, wobei der Motor-Generator (70) einen Rotor (71) umfasst, der am mittleren Element (10) befestigt ist und eine Rotormagnetvorrichtung (72) umfasst, die sich im Inneren des mittleren Elements (10) befindet.

12. Turbogeneratoranordnung nach einem der vorstehenden Ansprüche, weiter umfassend:
- ein erstes radiales Lager (50), das axial zwischen der Turbine (30) und dem Kompressor (20) gelegen ist und dazu vorgesehen ist, das mittlere Element (10) drehend zu führen; und
- ein zweites radiales Lager (60), das axial zwischen dem Kompressor (20) und dem Motor-Generator (70) gelegen ist und dazu vorgesehen ist, das mittlere Element (10) drehend zu führen.

13. Turbogeneratoranordnung nach Anspruch 12, wobei das erste (50) und das zweite (60) radiale Lager die einzigen radialen Lager sind.

14. Turbogeneratoranordnung nach Anspruch 12 oder 13, umfassend einen Luftkanal (25), der zum Kompressor (20) führt, wobei der Luftkanal (25) zwischen dem Kompressor (20) und dem zweiten radialen Lager (60) gelegen ist und eine radiale Komponente aufweist.

15. Einrichtung zur Stromerzeugung oder zur Kraft-Wärme-Kopplung (2), umfassend eine Turbogeneratoranordnung (1) nach einem der vorstehenden Ansprüche.

## Claims

1. A turbine generator assembly (1) comprising:
• a turbine (30) configured to be supplied with combustion gases by a combustion device (90);
• a compressor (20) mechanically coupled to the turbine (30) by a central element (10); and
• a motor-generator (70) axially offset from the compressor (20) and mechanically coupled to the turbine (30) and the compressor (20) by the central element (10);
**characterized in that** the turbine generator assembly (1) comprises an angular position detector (110) for the central element (10) comprising:
- a target (111) attached to one end (12) of the central element (10), and
- an inductive sensor (115) stationary relative to a stator (73) of the motor-generator (70),
wherein the inductive sensor (115) is connected to an electronic device (118) which comprises an angular position acquisition card and which axially extends and is aligned with the inductive sensor (115), without projecting radially with respect to the latter.

2. The turbine generator assembly according to claim 1, wherein:
- the target (111) is arranged in a radial plane at the end (12) of the central element (10), and
- the inductive sensor (115) is axially aligned with, and faces, the target (111).

3. The turbine generator assembly according to claim 1 or 2, wherein a distance separating the target (111) and the inductive sensor (115) is between 0.5 and 2.0 mm.

4. The turbine generator assembly according to any of the preceding claims, wherein the electronic device (118) is supported by an ogive-shaped casing (116) axially extending the inductive sensor (115).

5. The turbine generator assembly according to any of the preceding claims, in which the target (111) consists of an insulating surface (112) and a metallic radial element (113).

6. The turbine generator assembly according to claim 5, wherein the metallic radial element (113) partially covers the insulating surface (112) so that it is arranged axially between the inductive sensor (115) and the insulating surface (112).

7. The turbine generator assembly according to any of the preceding claims, wherein the target (111) comprises a chamfered axial hole (114).

8. Turbine generator assembly according to any of the preceding claims, wherein the target (111) and the inductive sensor (115) each have a circular edge (d) of the same radius.

9. The turbine generator assembly according to any of the preceding claims, wherein the target (111) extends into a ring comprising a plurality of axial orifices (119).

10. The turbine generator assembly according to any one of claims 1 to 9, wherein the motor-generator (70) comprises a rotor (71) attached to the central element (10), and comprising a bipolar rotor magnet device (72).

11. The turbine generator assembly according to any one of claims 1 to 9, wherein the motor-generator (70) comprises a rotor (71) attached to the central element (10), and comprising a rotor magnet device (72) located inside the central element (10).

12. The turbine generator assembly according to any of the preceding claims, further comprising:
• a first radial bearing (50) located axially between the turbine (30) and the compressor (20) and designed to guide the central element (10) in rotation; and
• a second radial bearing (60), located axially between the compressor (20) and the motor-generator (70), and designed to guide the central element (10) in rotation.

13. The turbine generator assembly according to claim 12, in which the first (50) and second (60) radial bearings are the only radial bearings.

14. The turbine generator assembly according to claim 12 or 13,
comprising an air pipe (25) leading to the compressor (20), the air pipe (25) being located between the compressor (20) and the second radial bearing (60) and having a radial component.

15. A power generation or energy cogeneration unit (2) comprising a turbine generator assembly (1) according to any of the preceding claims.
